# FASCICULE DE BREVET EUROPEEN

(11) **EP 2 539 601 B1**
(45) Date de publication et mention de la délivrance du brevet: **21.05.2014**
(21) Numéro de dépôt: 11709191.8
(22) Date de dépôt: 23.02.2011
(51) Int. Cl.: F16F 1/368, B60G 11/08

(54) **LAME DE RESSORT COMPOSITE A ARTICULATIONS POUR LIAISON AU SOL DE VEHICULE AUTOMOBILE, SON PROCEDE DE FABRICATION ET CETTE LIAISON AU SOL**
GELENKIGES VERBUNDFEDERBLATT FÜR DAS BODENKONTAKTSYSTEM EINES KRAFTFAHRZEUGES, VERFAHREN ZU IHRER HERSTELLUNG UND ERZEUGTES BODENKONTAKTSYSTEM
ARTICULATED COMPOSITE SPRING LEAF FOR THE GROUND CONTACT SYSTEM OF A MOTOR VEHICLE, METHOD OF MANUFACTURE THEREOF AND GROUND CONTACT SYSTEM CREATED

(30) Priorité: 24.02.2010 FR 1000751
(43) Date de publication de la demande: 02.01.2013
(73) Titulaire: Hutchinson, 75008 Paris (FR)
(72) Inventeur: NICQ, Geoffroy, 77810 Thomery (FR); CIOLCZYK, Jean-Pierre, F-45200 Montargis (FR); GONZALEZ-BAYON, Cristina, 45200 Amilly (FR)
(74) Mandataire: Bolinches, Michel Jean-Marie
(86) Numéro de dépôt international: PCT/IB2011/050746
(87) Numéro de publication internationale: WO 2011/104672

(56) Documents cités:
- EP-A1- 0 685 354
- EP-A2- 0 092 949
- FR-A1- 2 601 905

## Description

La présente invention concerne une lame de ressort composite pour liaison au sol d'un véhicule automobile destinée à être montée sur un train de roues avant ou arrière du véhicule, un procédé de fabrication de cette lame et une telle liaison au sol l'incorporant.

D'une manière connue, les liaisons au sol de véhicules automobiles peuvent incorporer sur leur train avant un système de type Mac Pherson réalisé avec un berceau métallique, une barre anti-roulis, un ressort et un triangle avant avec des articulations élastiques pour chaque roue. Cette solution présente l'inconvénient d'être lourde, de requérir de nombreux composants ainsi qu'un montage complexe, et de nécessiter un encombrement vertical important.

Pour ces raisons, on a cherché depuis quelques années à intégrer les fonctions d'un train avant Mac Pherson, à l'exception des amortisseurs, dans une lame de ressort en matériau composite, ce qui a permis de gagner de 10 à 14 kg environ pour un petit véhicule urbain. Une telle lame doit être pourvue d'articulations élastiques pour assurer la liaison avec le châssis du véhicule et pour doter le train avant des propriétés cinématiques requises par les constructeurs automobiles. Ces articulations élastiques (typiquement à base de caoutchouc) sont usuellement montées sur des interfaces collées sur la face supérieure de la lame, ce qui complexifie le procédé global de fabrication et en augmente le coût car il faut concevoir au préalable un moule de grandes dimensions qui intègre cette lame.

Un inconvénient de ces lames de ressort composites à articulations directement posées ou adhérées sur le train avant réside dans l'encombrement d'articulations à axe vertical et à centre de rotation situé dans le plan de la fibre neutre de la lame pour faciliter les réglages cinématiques du train.

C'est la raison pour laquelle on a cherché à utiliser des platines rapportées autour de la lame composite, ce qui présente l'inconvénient de requérir une opération séparée de moulage ou de formage dans la fabrication de la lame, ainsi que des couches interfaciales élastomères entre ces platines et la lame pour éviter tout phénomène d'abrasion et répartir les efforts de manière uniforme. Ces couches interfaciales élastomères peuvent en outre être pénalisantes pour les propriétés cinématiques du train avant, et peuvent conduire à prévoir des formes complexes pour limiter les degrés de liberté induits. On pourra par exemple se référer au document EP-B1-0 685 354 pour la description d'une telle lame composite à platines rapportées.

Un but de la présente invention est de proposer une lame de ressort composite pour liaison au sol d'un véhicule automobile destinée à être montée par ses deux extrémités de lame sur un train de roues avant ou arrière du véhicule, qui permette de remédier à l'ensemble des inconvénients précités, cette lame présentant deux faces supérieure et inférieure définissant ensemble deux bords longitudinaux reliés entre eux par lesdites extrémités et étant pourvue de deux paires d'éléments porteurs du châssis du véhicule respectivement à proximité desdites extrémités, les deux éléments porteurs de chaque paire étant respectivement agencés à proximité desdits bords longitudinaux et comportant des articulations élastiques destinées à être reliées au châssis.

A cet effet, une lame selon l'invention est telle que les deux éléments porteurs de chaque paire comportent respectivement deux inserts qui sont réalisés en un matériau composite thermoplastique ou thermodurcissable renforcé par des fibres qui est identique ou similaire à celui de la lame, ces inserts étant directement intégrés à la lame en la traversant transversalement de manière continue ou discontinue de l'un desdits bords longitudinaux à l'autre entre lesdites faces supérieure et inférieure, et en s'étendant au-delà desdits bords longitudinaux, de telle sorte que ces inserts puissent s'opposer à un vrillage éventuel de la lame, notamment dans le cas d'un train avant.

On notera que ces inserts permettent non seulement de limiter le vrillage de la lame en roulage, mais en outre de monter l'une au moins des deux articulations qu'ils reçoivent en porte-à-faux par rapport à la lame, comme cela sera expliqué ci-dessous.

Selon une autre caractéristique de l'invention, les inserts de chaque paire peuvent traverser la lame en un emplacement de celle-ci définissant sa fibre neutre, tel que son plan longitudinal médian.

On notera que ces inserts intégrés à la lame au niveau de sa fibre neutre permettent de régler facilement la hauteur du centre de rotation des articulations, avec par exemple ce centre de rotation qui est situé dans le plan longitudinal médian de la lame dans le cas particulier d'un montage en porte-à-faux de ces articulations. De plus, ce positionnement des inserts au niveau de la fibre neutre de la lame permet de minimiser les contraintes de flexion induites sur ces inserts et de limiter ainsi leurs dimensions.

Avantageusement, les inserts de chaque paire peuvent être formés d'un seul tenant avec la lame sans couche intermédiaire interfaciale, telle qu'une couche adhésive ou élastique.

On notera que l'utilisation précitée d'un matériau composite thermoplastique ou thermodurcissable renforcé par des fibres qui est identique ou similaire à celui de la lame (en étant compatible avec celui de la lame dans le cas d'un autre matériau composite), permet de réaliser l'ensemble de la lame et des inserts en un processus unique, comme expliqué ci-après.

Selon une autre caractéristique de l'invention, les inserts de chaque paire peuvent adhérer directement à la lame par intercalation de ces inserts entre deux parties ou moitiés respectivement supérieure et inférieure de la lame appliquées de part et d'autre d'une portion interne de ces inserts traversant la lame.

Selon un exemple préférentiel de réalisation de l'invention, ladite portion interne est continue à l'intérieur de la lame, les inserts de chaque paire étant soudés l'un à l'autre au niveau de cette portion interne ou bien formant une structure monobloc, ces deux inserts présentant respectivement deux portions externes par rapport à la lame qui supportent les articulations et ne sont pas reliées entre elles hors de la lame.

On notera en variante que les inserts de chaque paire pourraient être intégrés à la lame en formant une portion interne discontinue à travers cette lame, cette discontinuité transversale à l'intérieur de la lame pouvant résulter de l'utilisation de deux inserts séparés non soudés l'un à l'autre, i.e. formant un espace transversalement médian suite à l'intégration de ces inserts à la lame.

Egalement à titre préférentiel, le matériau utilisé pour la lame et pour les inserts est un composite thermoplastique, tel qu'un polyamide, renforcé par des fibres continues ou non.

En variante, ce matériau utilisé pour la lame et les inserts pourrait être un composite thermodurcissable, tel qu'une résine époxy, renforcé par des fibres continues ou non.

Selon une autre caractéristique de l'invention, les inserts de chaque paire présentent respectivement deux portions externes par rapport à la lame qui supportent les articulations et dont l'une au moins peut s'étendre globalement dans le prolongement plan dudit bord longitudinal correspondant et, de préférence dans un plan longitudinal médian de la lame.

Avantageusement, les portions externes respectives des inserts de chaque paire peuvent s'étendre toutes deux globalement dans le prolongement plan desdits bords longitudinaux et de préférence dans un plan longitudinal médian de la lame, de telle sorte que les articulations que supportent respectivement ces inserts soient positionnées en porte-à-faux par rapport à la lame.

En variante, ladite portion externe de l'un des inserts de chaque paire peut s'étendre au-delà dudit bord longitudinal correspondant en étant recourbée à 180° vers la face supérieure de la lame et en se terminant sur cette lame par une partie plane supportant l'articulation correspondante.

Avantageusement, les deux articulations que supportent respectivement les inserts de chaque paire peuvent être chacune conçues pour recevoir indépendamment l'une de l'autre un axe vertical, un axe horizontal dans la direction longitudinale de la lame ou un axe horizontal dans une direction transversale à la lame, à titre non limitatif.

On notera d'une manière générale que les articulations peuvent être orientées non seulement selon ces trois axes principaux, mais encore selon toute autre direction notamment dans le plan horizontal, facilitant l'installation et le réglage cinématique du train concerné.

Selon une autre caractéristique de l'invention, les inserts de chaque paire présentent, à l'intérieur de la lame, une portion interne délimitée transversalement par rapport à la lame par deux bords transversaux, l'épaisseur de cette portion interne pouvant avantageusement croître à partir de l'un au moins de ses bords transversaux jusqu'à une partie médiane de cette portion interne qui est située à égale distance desdits bords transversaux et qui présente une épaisseur maximale, la lame pouvant présenter au droit de ladite portion interne une zone dont l'épaisseur mesurée entre ses faces supérieure et inférieure varie de manière analogue à celle de cette portion interne en suivant son profil.

Dans ce cas, cette portion interne peut présenter une géométrie profilée sensiblement en forme de pointe évasée de crayon en l'un au moins de ses bords transversaux, vu en section longitudinale dans un plan perpendiculaire à la lame, ladite zone de lame pouvant présenter une augmentation progressive d'épaisseur au droit du ou de chaque bord transversal.

On notera que ces inserts intégrés à la lame peuvent ainsi être utilisés :
- pour augmenter localement l'épaisseur de cette lame, dans le cas où l'épaisseur de leur portion interne croît à partir de leurs deux bords transversaux (symétriques l'un de l'autre), ou bien
- pour amorcer une augmentation d'épaisseur de la lame à partir du bord transversal profilé de la portion interne, augmentation qui se poursuit au-delà de l'autre bord transversal non profilé (dans ce cas, des fibres de surépaisseur sont rajoutées sur le côté plat de cette portion interne).

On notera également que cette géométrie profilée, symétrique ou non, sensiblement en forme de crayon à une ou deux pointes évasées (i.e. sensiblement en forme de demi-amande ou d'amande, respectivement) permet avantageusement de préserver la continuité des fibres et d'éviter tout changement brusque de leur orientation qui créerait une concentration des contraintes, ainsi que d'éviter toute accumulation locale de résine dont les propriétés mécaniques sont inférieures à celles du matériau composite utilisé et qui pourrait générer rapidement une amorce de rupture ou de délaminage.

D'une manière générale, on comprendra qu'une lame de ressort composite selon l'invention peut présenter des épaisseurs et des sections variables pour optimiser son fonctionnement, en particulier la fréquence de pompage, la raideur anti-roulis et la prise de flèche. Quant aux inserts intégrés à cette lame, ils peuvent être globalement plans ou de forme plus complexe et plus ou moins épaisse pour conférer de la raideur aux portions externes en porte-à-faux supportant les articulations.

Une liaison au sol d'un véhicule automobile selon l'invention est destinée à être montée sur un train de roues avant ou arrière du véhicule, et elle comprend une lame transversale de ressort composite montée sur ce train telle que définie ci-dessus.

Un procédé de fabrication selon l'invention d'une lame de ressort composite telle que définie ci-dessus comprend :
- un moulage des inserts de chaque paire, puis un assemblage de deux parties respectivement supérieure et inférieure de la lame contre une portion interne transversalement médiane commune à ces inserts pré-moulés, ou bien
- un moulage concomitant de la lame et de ces inserts.

De préférence, on réalise cet assemblage par :
- une compression de fibres pré-imprégnées utilisées dans la lame et dans ces inserts, avec une cuisson ou un réchauffage de l'ensemble de la lame et de ces inserts, ou bien par
- une mise en forme dans un moule de fibres sèches continues pré-tissées utilisées dans la lame et dans ces inserts, avec une injection de préférence réalisée sous vide ou bien avec une infusion.

En variante, lorsque le matériau utilisé pour la lame et pour ces inserts est un composite thermoplastique, on peut mettre en oeuvre un chauffage et une compression pour réaliser cet assemblage.

Selon une autre variante de l'invention, lorsque le matériau utilisé pour la lame et pour ces inserts est un composite thermodurcissable, on peut mettre en oeuvre une polymérisation par cuisson dans un moule pour réaliser cet assemblage.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels ;
la figure 1 est une vue schématique partielle en perspective d'une lame de ressort composite selon un premier exemple de réalisation de l'invention, montrant des axes de support du châssis rapportés dans des articulations d'éléments porteurs de la lame,
la figure 2 est une vue schématique partielle en perspective et en coupe transversale de cette lame suivant le plan II-II de la figure 1,
la figure 3 est une vue schématique partielle de détail, en perspective et en coupe transversale dans ce même plan de coupe, d'une variante de la lame de la figure 2 selon ce premier exemple,
la figure 4 est une vue schématique partielle en perspective et en coupe transversale d'une lame de ressort composite selon un deuxième exemple de réalisation de l'invention, montrant d'autres axes de support du châssis rapportés dans des articulations d'éléments porteurs de la lame,
la figure 5 est une vue schématique partielle de détail, en perspective et en coupe transversale dans ce même plan de coupe, d'une variante de la lame de la figure 4 selon ce second exemple,
la figure 6 est une vue schématique partielle en perspective d'une lame de ressort composite selon un troisième exemple de réalisation de l'invention,
la figure 7 est une vue schématique en section verticale longitudinale suivant le plan VII-VII de la figure 6 d'un profil de lame intégrant les éléments porteurs selon les exemples précités de l'invention, et
la figure 8 est une vue schématique en section verticale longitudinale d'un autre profil selon l'invention d'une lame à éléments porteurs selon les exemples précités.

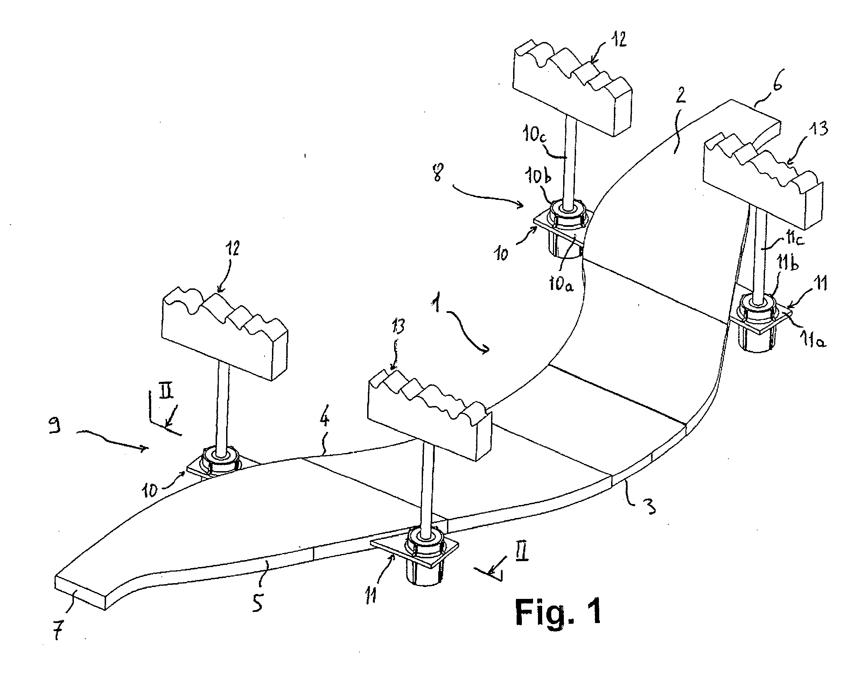

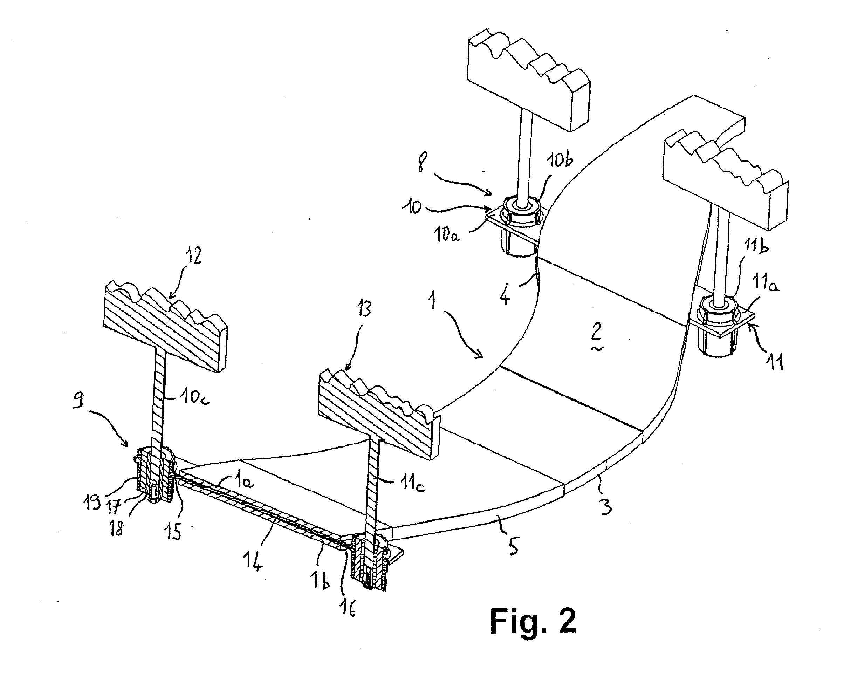

La lame de ressort 1 pour train avant ou arrière de véhicule automobile illustrée aux figures 1 et 2 est réalisée en un matériau composite thermoplastique ou thermodurcissable, avec deux faces supérieure 2 et inférieure 3 reliées entre elles par deux bords longitudinaux 4 et 5 et deux extrémités de lame 6 et 7 destinées à être fixées aux porte roues, et cette lame 1 est pourvue à proximité de ses extrémités respectives 6 et 7 de deux paires 8 et 9 d'éléments porteurs 10 et 11 de portions de la caisse ou châssis 12 et 13 du véhicule (ces portions de caisse 12 et 13 étant montrées schématiquement, étant entendu que leur forme est susceptible de varier dans une large mesure).

Les deux éléments porteurs 10 et 11 de chaque paire 8, 9 comprennent deux inserts 10a et 11a respectivement agencés à proximité des bords longitudinaux 4 et 5 (i.e. deux inserts avant et arrière pour le véhicule), et deux articulations élastiques 10b et 11b qui sont rapportées sur ces inserts 10a et 11a et qui reçoivent des axes 10c et 11c (tous verticaux dans ce premier exemple) reliés à ces portions de caisse 12 et 13. Comme visible dans la partie en coupe de la figure 2, les deux inserts 10a et 11 a de chaque paire 8, 9 sont intégrés à la lame 1 en une portion transversalement interne 14 qui leur est commune et contre laquelle sont plaquées deux demi-lames 1a et 1b respectivement supérieure et inférieure, et dépassent des bords de lame 4 et 5 en deux portions transversalement externes 15 et 16 qui, à l'instar de la portion interne 14, s'étendent dans le plan longitudinal médian (i.e. suivant la fibre neutre) de la lame 1.

Dans ce premier exemple, on voit que les deux inserts 10a et 11a sont soudés l'un à l'autre au centre de la portion interne 14 ou bien constituent une structure monobloc de raidissement avec ces inserts 10a et 11 a qui, dans les deux cas, sont formés d'un seul tenant avec les deux demi-lames 1a et 1b en étant intimement liés ou soudés à ces dernières par le procédé de fabrication de l'ensemble de cette lame 1, comme cela sera exposé ci-dessous.

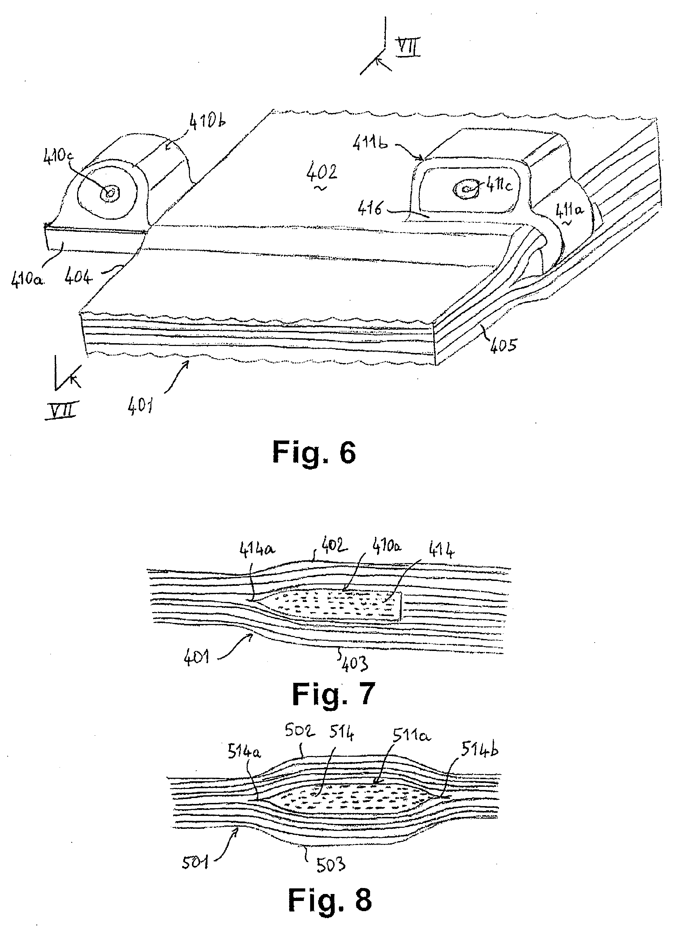

Les inserts 10a à 410a et 11a à 511a selon les figures 1 à 8 sont de préférence réalisées avec le même matériau composite que la lame 1 à 501, comme par exemple en un pré-imprégné thermoplastique renforcé par des fibres continues (de préférence un polyamide renforcé par des fibres de verre ou de carbone), en un thermoplastique moulé renforcé par des fibres courtes, ou encore en un thermodurcissable (de préférence une résine époxy renforcée par des fibres de verre) infusé ou injecté sur des fibres continues. Dans le cas de l'utilisation de fibres de renfort continues, ces fibres sont de préférences orientées selon la direction principale de l'insert 10a à 410a, 11a à 511 a (i.e. suivant la direction transversale à la lame 1 à 501, voir figures 7 et 8).

Quant aux articulations 10b et 11 b à 510b et 511 b visibles sur ces figures 1 à 8, elles sont réalisées de préférence avec du caoutchouc à titre d'élément résilient 17, l'armature interne 18 étant en métal et l'armature externe 19 en plastique renforcé ou non. Dans l'exemple des figures 1 à 3, cette armature externe 19 s'emmanche dans le fût de l'insert 10a, 11a ou 110a, 111a correspondant, si un tel fût existe, ou bien elle peut s'engager dans un orifice de l'insert 10a, 11a ou 110a, 111a et y être fixée au moyen d'un écrou ou d'inserts filetés. Dans ce dernier cas, l'armature externe 19 de l'articulation est structurante.

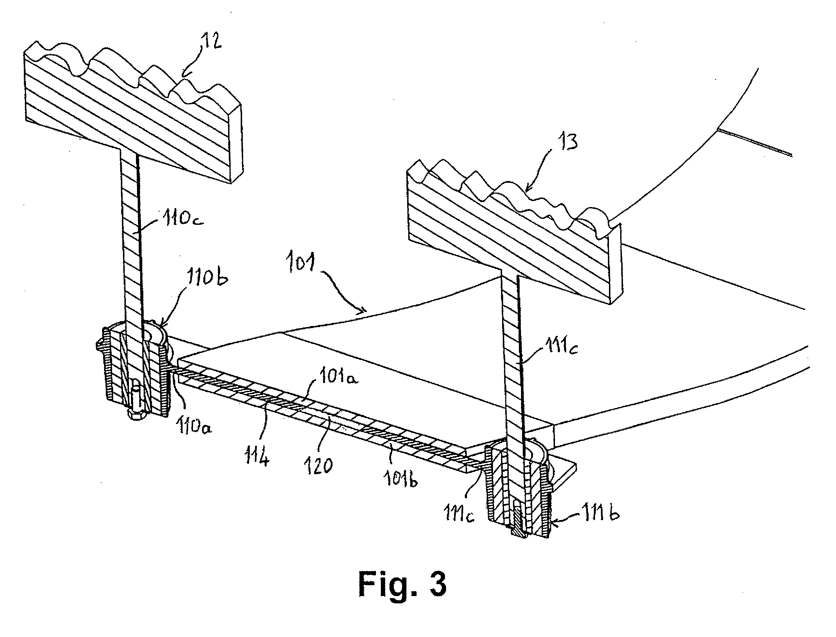

La lame composite 101 selon la variante de la figure 3 se distingue uniquement de celle de la figure 2, en ce que les deux inserts latéraux 110a et 111a de chaque paire - qui portent les articulations 110b et 111b à axes 110c et 111c - sont séparés au niveau de leur portion interne à la lame 114 par un espace transversal 120, n'étant pas soudés entre eux à l'intérieur des deux demi-lames 101 a et 101 b.

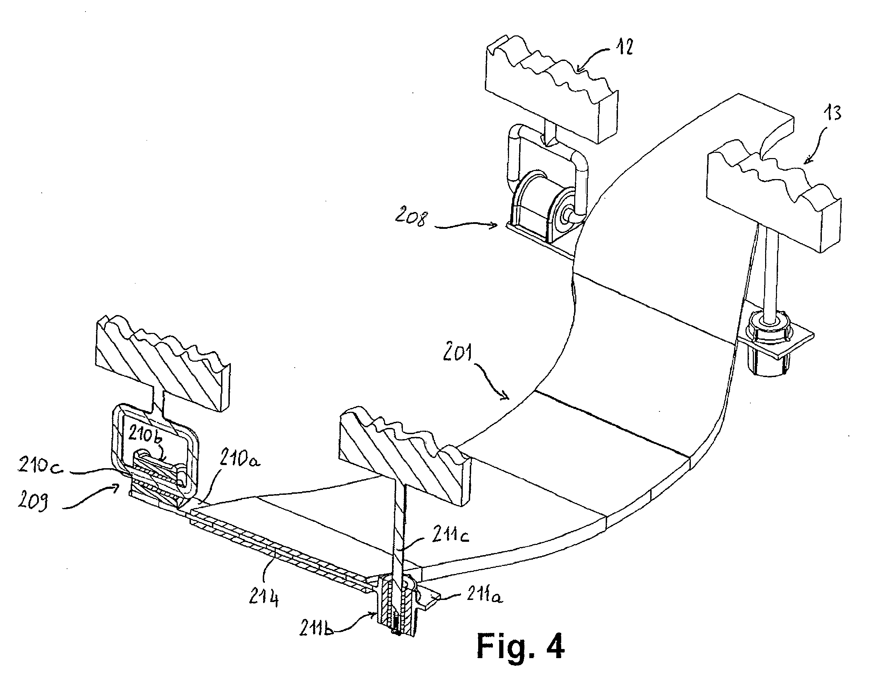

La lame composite 201 illustrée à la figure 4 présente une portion interne 214 commune à ses deux inserts 210a et 211 a, et elle se distingue uniquement de celle de la figure 2, en ce que l'un des deux inserts 210a de chaque paire 208 et 209 (i.e. les inserts avant ou les inserts arrière du train considéré) porte une articulation 210b à axe 210c non pas vertical mais horizontal transversal par rapport à la lame 201 (i.e. d'axe longitudinal par rapport au véhicule). On voit dans cet exemple de réalisation d'une telle articulation 210b à axe horizontal 210c, que ce dernier est inséré de manière pivotante à l'intérieur d'une douille solidaire de l'insert 210a. Quant à l'articulation 211b de l'autre insert 211a, elle reçoit dans cet exemple un axe 211c vertical.

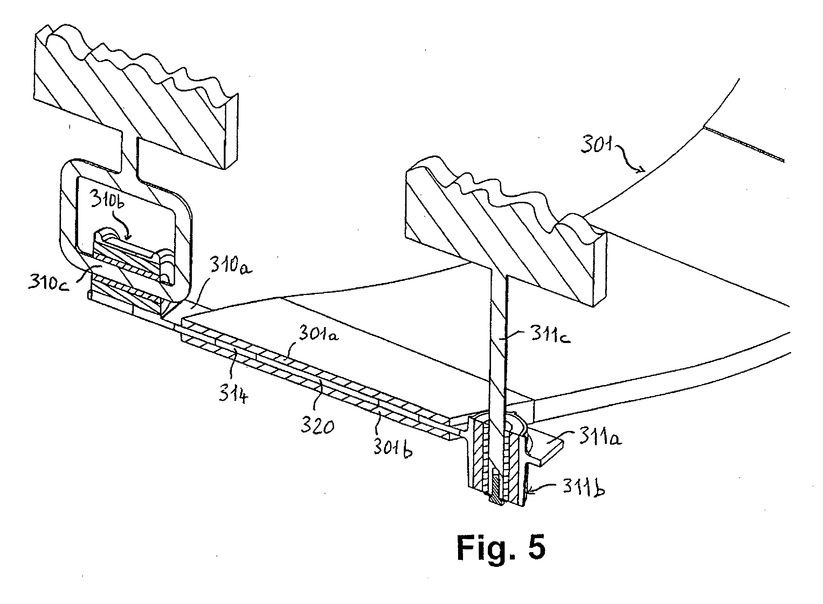

La lame composite 301 selon la variante de la figure 5 se distingue uniquement de celle de la figure 4, en ce que les deux inserts latéraux 310a et 311a de chaque paire - qui portent les articulations 310b et 311 b à axes 310c et 311 c - sont séparés par un espace transversal 320 au niveau de leur portion interne à la lame 314, n'étant pas soudés entre eux à l'intérieur des deux demi-lames 301 a et 301 b.

Contrairement aux exemples des figures 1 à 5 qui montrent des inserts portant des articulations 10b à 310b et 11 b à 311 b en porte-à-faux par rapport au reste de la lame 1 à 301, l'exemple de la figure 6 montre, pour chaque paire, l'un des inserts 411a (avant ou arrière) qui est recourbé à 180° vers la face supérieure 402 de la lame 401 à partir du bord longitudinal 405 correspondant de celle-ci. Cet insert 411 a se termine par une partie plane 416 qui est en contact avec cette face de lame 402 à proximité immédiate de ce bord 405 et qui porte dans cet exemple une articulation 411 b d'axe 411 c horizontal longitudinal par rapport à la lame 401 (i.e. transversal pour le véhicule). Quant à l'autre insert 410a de chaque paire, il est dans cet exemple analogue à ceux des figures 1 à 5, à savoir définissant une portion externe s'étendant au-delà du bord 404 correspondant dans le plan longitudinal médian de la lame 401, à ceci près que l'articulation 410b de cet autre insert 410a est conçue pour recevoir tout comme l'articulation 411b un axe 410c horizontal longitudinal par rapport à la lame 401.

On notera que les articulations 10b à 410b et 11b à 411b illustrées aux figures 1 à 6 et les axes 10c à 410c et 11c à 411c qu'elles reçoivent ne sont que des exemples parmi d'autres de l'invention, et que ces articulations pourraient présenter toute autre forme appropriée facilitant leur montage et les réglages cinématiques du train concerné.

Les inserts 411 a et 511 a des lames 401 et 501 selon les figures 7 et 8 illustrent d'une manière générale la possibilité d'utiliser, pour la portion interne 414 et 514 commune à ces inserts, une section longitudinale profilée en forme de crayon présentant une pointe évasée en un seul bord transversal 414a de cette portion 414 pour augmenter progressivement l'épaisseur de la lame 401 à partir de ce bord 414a (i.e. entre ses faces supérieure 402 et inférieure 403, voir figure 7), ou bien présentant deux pointes évasées symétriques l'une de l'autre aux deux bords 514a et 514b de cette portion 514 pour créer une surépaisseur progressive et locale de la lame 501 en regard (voir la forme d'amande aplatie de l'insert 511 a de la figure 8 qui forme ce renflement entre les faces supérieure 502 et inférieure 503 de la lame 501).

Pour l'ensemble des exemples de réalisation précités, on peut procéder comme suit pour fabriquer les lames 1 à 501 et les inserts 10a à 410a, 11 a à 511a qu'elles intègrent. On peut réaliser au choix :
- un pré-moulage des inserts, puis un assemblage des deux demi-lames 1a, 101a, 301 a et 1b, 101b à 301b contre la portion interne 14 à 514 transversalement médiane commune à ces inserts pré-moulés, ou bien
- un moulage concomitant de la lame et de ces inserts, avec par exemple :
   * une compression de fibres pré-imprégnées utilisées dans la lame et dans les inserts, et une cuisson ou un réchauffage de l'ensemble, ou bien avec
   * une mise en forme dans un moule de fibres sèches continues pré-tissées utilisées dans la lame et dans les inserts et une injection sous vide par un procédé de type « RTM » (pour « Resin Transfer Molding » en anglais, soit moulage par transfert de résine) ou de type « VARTM » (pour « Vacuum Assisted Resin Transfer Molding » en anglais, soit moulage par transfert de résine assisté par le vide), ou bien une infusion.

Si l'on utilise un composite thermoplastique pour la lame et les inserts 10a à 410a, 11a à 511a, on peut réaliser un chauffage et une compression pour obtenir l'ensemble, alors que si l'on utilise un composite thermodurcissable, on peut réaliser à la place une polymérisation par cuisson dans un moule.

## Revendications

1. Lame de ressort composite (1 à 501) pour liaison au sol d'un véhicule automobile destinée à être montée par ses deux extrémités de lame (6 et 7) sur un train de roues avant ou arrière du véhicule, cette lame présentant deux faces supérieure (2, 402) et inférieure (3) définissant ensemble deux bords longitudinaux (4 et 5) reliés entre eux par lesdites extrémités et étant pourvue de deux paires (8 et 9, 208 et 209) d'éléments porteurs (10 et 11) du châssis (12 et 13) du véhicule respectivement à proximité desdites deux extrémités, les deux éléments porteurs de chaque paire étant respectivement agencés à proximité desdits bords longitudinaux et comportant des articulations élastiques (10b à 410b, 11 b à 411 b) destinées à être reliées au châssis, **caractérisée en ce que** les deux éléments porteurs de chaque paire comportent respectivement deux inserts (10a à 410a, 11a à 511a) qui sont réalisés en un matériau composite thermoplastique ou thermodurcissable renforcé par des fibres qui est identique ou similaire à celui de la lame, ces inserts étant directement intégrés à la lame en la traversant transversalement de manière continue ou discontinue de l'un desdits bords longitudinaux à l'autre entre lesdites faces supérieure et inférieure, et en s'étendant au-delà desdits bords longitudinaux.

2. Lame (1 à 501) selon la revendication 1, **caractérisée en ce que** lesdits inserts (10a à 410a, 11a à 511 a) de chaque paire (8 et 9, 208 et 209) traversent la lame en un emplacement de celle-ci définissant sa fibre neutre, tel que son plan longitudinal médian.

3. Lame (1 à 501) selon la revendication 1 ou 2, **caractérisée en ce que** lesdits inserts (10a à 410a, 11 a à 511 a) de chaque paire (8 et 9, 208 et 209) sont formés d'un seul tenant avec la lame sans couche intermédiaire interfaciale, telle qu'une couche adhésive ou élastique.

4. Lame (1 à 501) selon la revendication 3, **caractérisée en ce que** lesdits inserts (10a à 410a, 11a à 511a) de chaque paire (8 et 9, 208 et 209) adhèrent directement à la lame par intercalation de ces inserts entre deux parties respectivement supérieure (1a, 101 a, 301a) et inférieure (1 b, 101 b, 301 b) de la lame appliquées de part et d'autre d'une portion interne (14 à 514) de ces inserts traversant la lame.

5. Lame (1, 201, 401, 501) selon la revendication 4, **caractérisée en ce que** ladite portion interne (14, 214, 414, 514) est continue à l'intérieur de la lame, lesdits inserts (10a, 210a, 410a et 11 a, 211 a, 411 a, 511 a) de chaque paire (8 et 9, 208 et 209) étant soudés l'un à l'autre au niveau de cette portion interne ou bien formant une structure monobloc, ces deux inserts présentant respectivement deux portions externes (15 et 16) par rapport à la lame qui supportent lesdites articulations (10b, 210b, 410b et 11 b, 211 b, 411 b) et qui ne sont pas reliées entre elles hors de la lame.

6. Lame (1 à 501) selon une des revendications précédentes, **caractérisée en ce que** ledit matériau utilisé pour la lame et pour lesdits inserts (10a à 410a, 11a à 511a) est un composite à matrice thermoplastique, telle qu'un polyamide, ou un composite à matrice thermodurcissable, telle qu'une résine époxy.

7. Lame (1 à 501) selon une des revendications précédentes, **caractérisée en ce que** lesdits inserts (10a à 410a, 11 a à 511 a) de chaque paire (8 et 9, 208 et 209) présentent respectivement deux portions externes (15 et 16) par rapport à la lame qui supportent lesdites articulations (10b à 410b, 11b à 411b) et dont l'une au moins s'étend globalement dans le prolongement plan dudit bord longitudinal (4, 404 et 5, 405) correspondant et, de préférence dans un plan longitudinal médian de la lame.

8. Lame (1 à 301) selon la revendication 7, **caractérisée en ce que** lesdites portions externes (15 et 16) respectives desdits inserts (10a à 310a, 11a à 311 a) de chaque paire (8 et 9, 208 et 209) s'étendent toutes deux globalement dans le prolongement plan desdits bords longitudinaux (4 et 5) et de préférence dans un plan longitudinal médian de la lame, de telle sorte que lesdites articulations (10b à 310b, 11 b à 311 b) que supportent respectivement ces inserts soient positionnées en porte-à-faux par rapport à la lame.

9. Lame (401) selon la revendication 7, **caractérisée en ce que** ladite portion externe de l'un desdits inserts (411a) de chaque paire s'étend au-delà dudit bord longitudinal (405) correspondant en étant recourbée à 180° vers ladite face supérieure (402) de la lame et en se terminant sur cette lame par une partie plane (416) supportant ladite articulation (411 b) correspondante.

10. Lame (401, 501) selon une des revendications précédentes, **caractérisée en ce que** lesdits inserts (410a, 411a, 511a) de chaque paire présentent, à l'intérieur de la lame, une portion interne (414, 514) délimitée transversalement par rapport à la lame par deux bords transversaux (414a, 514a et 514b), l'épaisseur de cette portion interne croissant à partir de l'un au moins de ses bords transversaux jusqu'à une partie médiane de cette portion interne qui est située à égale distance desdits bords transversaux et qui présente une épaisseur maximale, la lame présentant au droit de ladite portion interne une zone dont l'épaisseur mesurée entre ses faces supérieure (402, 502) et inférieure (403, 503) varie de manière analogue à celle de cette portion interne en suivant son profil, et de préférence **en ce que** ladite portion interne (414, 514) présente une géométrie profilée sensiblement en forme de pointe évasée de crayon en l'un au moins desdits deux bords transversaux (414a, 514a et 514b), vue en section longitudinale dans un plan perpendiculaire à la lame, ladite zone de la lame présentant une augmentation progressive d'épaisseur au droit dudit ou de chaque bord transversal.

11. Lame (1 à 501) selon une des revendications précédentes, **caractérisée en ce que** lesdites deux articulations (10b à 410b, 11 b à 411 b) que supportent respectivement lesdits inserts (10a à 410a, 11a à 511a) de chaque paire (8 et 9, 208 et 209) sont chacune conçues pour recevoir indépendamment l'une de l'autre un axe vertical (10c, 11 c, 110c, 111c, 211c, 311 c), un axe horizontal dans la direction longitudinale de la lame (410c, 411c) ou un axe horizontal dans une direction transversale à la lame (210c, 310c).

12. Liaison au sol d'un véhicule automobile destinée à être montée sur un train de roues avant ou arrière du véhicule et comprenant une lame transversale de ressort composite (1 à 501) montée sur ce train, **caractérisée en ce que** cette lame est telle que définie à l'une des revendications précédentes.

13. Procédé de fabrication d'une lame de ressort composite (1 à 501) selon une des revendications 1 à 11, **caractérisé en ce qu'**il comprend :
- un moulage desdits inserts (10a à 410a, 11a à 511a) de chaque paire (8 et 9, 208 et 209), puis un assemblage de deux parties respectivement supérieure (1a, 101a, 301a) et inférieure (1b, 101b, 301b) de la lame contre une portion interne transversalement médiane (14 à 514) commune à ces inserts pré-moulés, ou bien
- un moulage concomitant de la lame et de ces inserts.

14. Procédé selon la revendication 13, **caractérisé en ce que** l'on réalise ledit assemblage par :
- une compression de fibres pré-imprégnées utilisées dans la lame (1 à 501) et dans ces inserts (10a à 410a, 11a à 511 a), avec une cuisson ou un réchauffage de l'ensemble de la lame et de ces inserts, ou bien par
- une mise en forme dans un moule de fibres sèches continues pré-tissées utilisées dans la lame et dans ces inserts, avec une injection de préférence réalisée sous vide ou bien avec une infusion.

15. Procédé selon la revendication 13, **caractérisé en ce que** le matériau utilisé pour la lame (1 à 501) et pour ces inserts (10a à 410a, 11 a à 511 a) est un composite thermoplastique, et **en ce que** l'on met en oeuvre un chauffage et une compression pour réaliser ledit assemblage, ou bien **en ce que** le matériau utilisé pour la lame (1 à 501) et pour ces inserts (10a à 410a, 11 a à 511 a) est un composite thermodurcissable, et **en ce que** l'on met en oeuvre une polymérisation par cuisson dans un moule pour réaliser ledit assemblage.

## Patentansprüche

1. Verbundfederblatt (1 bis 501) zur Verbindung eines Kraftfahrzeugs mit dem Boden, das dazu bestimmt ist, durch seine zwei Blattenden (6 und 7) über einem Satz Vorder- oder Hinterräder des Fahrzeugs montiert zu sein, wobei dieses Blatt zwei Flächen, eine obere (2, 402) und eine untere (3), aufweist, die zusammen zwei Längskanten (4 und 5) definieren, die untereinander durch die zwei Enden verbunden sind und die mit zwei Paaren (8 und 9, 208 und 209) an Trägerelementen (10 und 11) des Rahmens (12 und 13) des Fahrzeugs versehen sind, die jeweils in der Nähe der zwei Enden sind, wobei die zwei Trägerelemente von jedem Paar jeweils in der Nähe der Längskanten angeordnet sind und elastische Gelenke (10b bis 410b, 11 b bis 411 b) aufweisen, die dazu bestimmt sind, mit dem Rahmen verbunden zu sein, **dadurch gekennzeichnet, dass** die zwei Trägerelemente von jedem Paar jeweils zwei Einsatzteile (10a bis 410a, 11 a bis 511 a) aufweisen, die aus einem thermoplastischen oder duroplastischen Verbundmaterial ausgeführt sind, das durch Fasern verstärkt ist, wobei dieses mit dem des Blattes identisch ist oder diesem ähnlich ist, wobei diese Einsatzteile mit dem Blatt direkt integriert sind, indem dieses in Querrichtung kontinuierlich oder diskontinuierlich von einer der Längskanten zur anderen zwischen der oberen und unteren Fläche durchquert wird und indem diese sich über die Längskanten hinaus erstrecken.

2. Blatt (1 bis 501) nach Anspruch 1, **dadurch gekennzeichnet, dass** die Einsatzteile (10a bis 410a, 11a bis 511a) von jedem Paar (8 und 9, 208 und 209) das Blatt an einer Stelle von diesem durchqueren, die seine neutrale Faser definiert, wie z.B. seiner Mittellängsebene.

3. Blatt (1 bis 501) nach Anspruch 1 oder 2, **dadurch gekennzeichnet, dass** die Einsatzteile (10a bis 410a, 11a bis 511a) von jedem Paar (8 und 9, 208 und 209) einstückig mit dem Blatt ohne Grenzflächen-Zwischenschicht, wie z.B. eine adhäsive oder elastische Schicht, ausgebildet sind.

4. Blatt (1 bis 501) nach Anspruch 3, **dadurch gekennzeichnet, dass** die Einsatzteile (10a bis 410a, 11 a bis 511 a) von jedem Paar (8 und 9, 208 und 209) an dem Blatt durch Zwischenfügen von diesen Einsatzteilen zwischen zwei Teile, ein oberes (1 a, 101 a, 301 a) bzw. ein unteres (1b, 101 b, 301 b), des Blattes direkt haften, die auf beide Seiten eines Innenabschnitts (14 bis 514) von diesen Einsatzteilen das Blatt durchquerend aufgebracht sind.

5. Blatt (1, 201, 401, 501) nach Anspruch 4, **dadurch gekennzeichnet, dass** der Innenabschnitt (14, 214, 414, 514) im Inneren des Blattes fortgesetzt ist, wobei die Einsatzteile (10a, 210a, 410a und 11 a, 211 a, 411 a, 511 a) von jedem Paar (8 und 9, 208 und 209) auf der Höhe von diesem Innenabschnitt aneinander geschweißt sind oder auch eine einstückige Struktur bilden, wobei diese zwei Einsatzteile jeweils zwei Außenabschnitte (15 und 16) in Bezug auf das Blatt aufweisen, die die Gelenke (10b, 210b, 410b und 11b, 211 b, 411 b) stützen und die außerhalb des Blattes untereinander nicht verbunden sind.

6. Blatt (1 bis 501) nach einem der vorhergehenden Ansprüche, **dadurch gekennzeichnet, dass** das Material, das für das Blatt und für die Einsatzteile (10a bis 410a, 11 a bis 511 a) verwendet wird, ein Composite mit thermoplastischer Matrix, wie z.B. ein Polyamid, oder ein Composite mit duroplastischer Matrix, wie z.B. ein Epoxidharz, ist.

7. Blatt (1 bis 501) nach einem der vorhergehenden Ansprüche, **dadurch gekennzeichnet, dass** die Einsatzteile (10a bis 41 0a, 11 a bis 511 a) von jedem Paar (8 und 9, 208 und 209) jeweils zwei Außenabschnitte (15 und 16) in Bezug auf das Blatt aufweisen, die die Gelenke (10b bis 410b, 11 b bis 411 b) stützen und von denen sich zumindest einer im Wesentlichen in der ebenen Verlängerung der entsprechenden Längskante (4, 404 und 5, 405) und vorzugsweise in einer Mittellängsebene des Blattes erstreckt.

8. Blatt (1 bis 301) nach Anspruch 7, **dadurch gekennzeichnet, dass** die jeweiligen äußeren Abschnitte (15 und 16) der Einsatzteile (10a bis 310a, 11 a bis 311 a) von jedem Paar (8 und 9, 208 und 209) sich alle beide im Wesentlichen in der ebenen Verlängerung der Längskanten (4 und 5) und vorzugsweise in einer Mittellängsebene des Blattes in der Weise erstrecken, dass die Gelenke (10b und 310b, 11b und 311b), welche diese Einsatzteile stützen, in Bezug auf das Blatt überhängend positioniert sind.

9. Blatt (401) nach Anspruch 7, **dadurch gekennzeichnet, dass** der Außenabschnitt von einem der Einsatzteile (411a) von jedem Paar sich über die entsprechende Längskante (405) hinaus erstreckt, indem eine Verkrümmung um 180° zur oberen Fläche (402) des Blattes vorliegt und indem dieser auf diesem Blatt durch einen ebenen Teil (416) endet, der das entsprechende Gelenk (411 b) stützt.

10. Blatt (401, 501) nach einem der vorhergehenden Ansprüche, **dadurch gekennzeichnet, dass** die Einsatzteile (410a, 411b, 511a) von jedem Paar im Inneren des Blattes einen Innenabschnitt (414, 514) aufweisen, der in Querrichtung in Bezug auf das Blatt durch zwei Querkanten (414a, 514a und 514b) abgegrenzt ist, wobei die Dicke dieses Innenabschnitts von der zumindest einen der Querkanten ausgehend bis zu einem Mittelteil von diesem Innenabschnitt zunimmt, der sich mit gleichem Abstand zu den Querkanten befindet und der eine Maximaldicke aufweist, wobei das Blatt senkrecht zu dem Innenabschnitt einen Bereich aufweist, dessen Dicke, die zwischen der oberen (402, 502) und unteren (403, 503) Fläche gemessen wird, sich analog der von diesem Innenabschnitt dem Profil davon folgend ändert, und vorzugsweise dass der Innenabschnitt (414, 514) eine Geometrie aufweist, die im Wesentlichen in Form einer erweiterten Stiftspitze profiliert ist, und zwar in zumindest einer der zwei Querkanten (414a, 514a und 514b) bei Betrachtung im Querschnitt in einer Ebene senkrecht zum Blatt, wobei der Bereich des Blattes einen zunehmende Dickenanstieg senkrecht zu der oder jeder Querkante aufweist.

11. Blatt (1 bis 501) nach einem der vorhergehenden Ansprüche, **dadurch gekennzeichnet, dass** die zwei Gelenke (10b bis 410b, 11 b bis 411 b), welche jeweils die Einsatzteile (10a bis 41 0a, 11 a bis 511 a) von jedem Paar (8 und 9, 208 und 209) stützen, jeweils in der Weise gestaltet sind, um voneinander unabhängig eine Vertikalachse (10c, 11 c, 110c, 111 c, 211 c, 311 c), eine Horizontalachse in der Längsrichtung des Blattes (410c, 411 c) oder eine Horizontalachse in einer Richtung quer zum Blatt (210c, 310c) aufzunehmen.

12. Verbindung eines Kraftfahrzeugs mit dem Boden, die dazu bestimmt ist, über einem Satz Vorder- oder Hinterräder des Fahrzeugs montiert zu sein und die ein Verbund-Quer-Federblatt (1 bis 501), das an diesem Satz montiert ist, aufweist, **dadurch gekennzeichnet, dass** das Blatt eines ist, wie es in einem der vorhergehenden Ansprüche definiert ist.

13. Verfahren zur Herstellung eines Verbundfederblattes (1 bis 501) nach einem der Ansprüche 1 bis 11, **dadurch gekennzeichnet, dass** dieses aufweist:
- ein Formen der Einsatzteile (10a bis 410a, 11a bis 511a) von jedem Paar (8 und 9, 208 und 209), dann ein Zusammenbauen von zwei Teilen, einem oberen (1 a, 101 a, 301 a) bzw. einem unteren (1 b, 101 b, 301 b), des Blattes gegen einen inneren Mittelquerabschnitt (14 bis 514), der diesen vorgeformten Einsatzteilen gemeinsam ist, oder auch
- ein begleitendes Formen des Blattes und seiner Einsatzteile.

14. Verfahren nach Anspruch 13, **dadurch gekennzeichnet, dass** das Zusammenbauen umgesetzt wird durch:
- ein Komprimieren von vorgetränkten Fasern, die in dem Blatt (1 bis 501) und den Einsatzteilen (10a bis 410a, 11a bis 511 a) verwendet werden, mit einem Brennen oder einem Erwärmen der Baugruppe des Blattes und dieser Einsatzteile oder auch durch
- eine Formgebung in einer Form von trockenen, durchgehenden, vorgewebten Fasern, die in dem Blatt und in diesen Einsatzteilen verwendet werden, mit einem Einspritzen, das vorzugsweise unter Vakuum oder auch mit einem Infusum ausgeführt wird.

15. Verfahren nach Anspruch 13, **dadurch gekennzeichnet, dass** das Material, das für das Blatt (1 bis 501) und für diese Einsatzteile (10a bis 410a, 11 a bis 511 a) verwendet wird, ein thermoplastisches Composite ist und dass ein Erwärmen und ein Komprimieren zum Umsetzen des Zusammenbauens ausgeführt wird, oder auch dass das das Material, das für das Blatt (1 bis 501) und für diese Einsatzteile (10a bis 410a, 11a bis 511a) verwendet wird, ein duroplastisches Composite ist und dass eine Polymerisation durch Brennen in einer Form zum Umsetzen des Zusammenbauens angewendet wird.

## Claims

1. Composite leaf spring (1 to 501) for the ground contact system of a motor vehicle intended to be mounted by the two extremities of the leaf (6 and 7) on a front or rear wheel set of the vehicle, this leaf having two upper (2, 402) and lower (3) surfaces, together defining two longitudinal edges (4 and 5) connected together by said extremities, and being provided with two pairs (8 and 9, 208 and 209) of bearer members (10 and 11) for the chassis (12 and 13) of the vehicle close to said two extremities respectively, the two bearer members of each pair being respectively located close to said longitudinal edges and comprising resilient articulations (10b to 41 0b, 11 b to 411 b) intended to be connected to the chassis, **characterized in that** the two bearer members in each pair respectively comprise two inserts (10a to 410a, 11a to 511a) made of a fiber-reinforced composite thermoplastic or thermosetting material which is identical to or similar to that of the leaf, these inserts being directly incorporated into the leaf by passing through it transversely in a continuous or discontinuous manner from one of said longitudinal edges to the other between said upper surface and lower surface, and by extending beyond said longitudinal edges.

2. Leaf (1 to 501) as claimed in claim 1, **characterized in that** said inserts (10a to 410a, 11a to 511 a) in each pair (8 and 9, 208 and 209) pass through the leaf at a location in the latter defining its neutral fiber, such as its median longitudinal plane.

3. Leaf (1 to 501) as claimed in claim 1 or 2, **characterized in that** said inserts (10a to 410a, 11 a to 511 a) in each pair (8 and 9, 208 and 209) are formed of one piece with the leaf, without any intermediate interfacial layer such as an adhesive or resilient layer.

4. Leaf (1 to 501) as claimed in claim 3, **characterized in that** said inserts (10a to 410a, 11 a to 511a) in each pair (8 and 9, 208 and 209) adhere directly to the leaf through interleaving these inserts between two upper (1a, 101a, 301a) and lower (1b, 101b, 301b) parts of the leaf respectively applied to either side of an internal portion (14 to 514) of these inserts passing through the leaf.

5. Leaf (1, 201, 401, 501) as claimed in claim 4, **characterized in that** said internal portion (14, 214, 414, 514) is continuous within the leaf, said inserts (10a, 210a, 410a and 11 a, 211 a, 411 a, 511 a) in each pair (8 and 9, 208 and 209) being welded to each other in this internal portion or else forming a monobloc structure, these two inserts respectively having two external portions (15 and 16) in relation to the leaf which support said articulations (10b, 210b, 410b and 11 b, 211 b, 411 b) and which are not connected to each other outside the leaf.

6. Leaf (1 to 501) as claimed in any one of the preceding claims, **characterized in that** said material used for the leaf and for said inserts (10a to 410a, 11a to 511a) is a thermoplastic matrix composite such as a polyamide, or a thermosetting matrix composite such as an epoxy resin.

7. Leaf (1 to 501) as claimed in any one of the preceding claims, **characterized in that** said inserts (10a to 410a, 11 a to 511 a) of each pair (8 and 9, 208 and 209) respectively have two external portions (15 and 16) with respect to the leaf which support said articulations (10b to 410b, 11 b to 411b) and at least one of which extends overall in the planar extension of said corresponding longitudinal edge (4, 404 and 5, 405) and preferably in a median longitudinal plane of the leaf.

8. Leaf (1 to 301) as claimed in claim 7, **characterized in that** said respective external portions (15 and 16) of said inserts (10a to 310a, 11a to 311a) in each pair (8 and 9, 208 and 209) both extend overall in a planar extension of said longitudinal edges (4 and 5) and preferably along a median longitudinal plane of the leaf, so that said articulations (10b to 310b, 11b to 311b) which are respectively supported by the inserts are positioned in a cantilevered way with respect to the leaf.

9. Leaf (401) as claimed in claim 7, **characterized in that** said external portion of one of said inserts (411 a) in each pair extends beyond said corresponding longitudinal edge (405), by being bent through 180° toward said upper surface (402) of the leaf and by ending on that leaf in a planar part (416) supporting said corresponding articulation (411 b).

10. Leaf (401, 501) as claimed in any one of the preceding claims, **characterized in that** said inserts (410a, 411 a, 511 a) in each pair have within the leaf an internal portion (414, 514) bounded transversely in relation to the leaf by two transverse edges (414a, 514a and 514b), the thickness of this internal portion increasing from at least one of its transverse edges to a median part of that internal portion which is located at an equal distance from said transverse edges and which has a maximum thickness, the leaf having alongside said internal portion a zone whose thickness measured between its upper surface (402, 502) and lower surface (403, 503) varies in a manner similar to that of the internal portion following its profile, and preferably **in that** said internal portion (414, 514) has a tapered geometry which is substantially in the shape of the sharpened point of a pencil in at least one of said two transverse edges (414a, 514a and 514b), seen in longitudinal cross section in a plane perpendicular to the leaf, said zone of the leaf having a progressive increase in thickness alongside the or each transverse edge.

11. Leaf (1 to 501) as claimed in any one of the preceding claims, **characterized in that** said two articulations (10b to 410b, 11 b to 411 b) which are respectively supported by said inserts (10a to 410a, 11a to 511a) in each pair (8 and 9, 208 and 209) are each designed to receive independently of each other a vertical axis (10c, 11c, 110c, 111 c, 211 c, 311 c), a horizontal axis in the longitudinal direction of the leaf (410c, 411c) or a horizontal axis in a transverse direction to the leaf (210c, 310c).

12. Ground contact system for a motor vehicle intended to be mounted on a front or rear wheel set of the vehicle and comprising a transverse composite leaf spring (1 to 501) mounted on that set, **characterized in that** the leaf is as defined in one of the preceding claims.

13. Process for the manufacture of a composite leaf spring (1 to 501) as claimed in any one of claims 1 to 11, **characterized in that** it comprises:
- molding said inserts (10a to 410a, 11a to 511a) in each pair (8 and 9, 208 and 209), followed by assembly of two respective upper (1a, 101 a, 301a) and lower (1b, 101 b, 301 b) parts of the leaf against a transverse median internal portion (14 to 514) common to these pre-molded inserts, or else
- simultaneously molding the leaf and these inserts.

14. Process as claimed in claim 13, **characterized in that** said assembly is constructed by:
- compressing pre-impregnated fibers used in the leaf (1 to 501) and in these inserts (10a to 410a, 11 a to 511 a), with curing or heating of the leaf and insert assembly, or else by
- shaping continuous pre-woven dry fibers used in the leaf and these inserts in a mold, with an injection preferably carried out under vacuum or else with an infusion.

15. Process as claimed in claim 13, **characterized in that** the material used for the leaf (1 to 501) and for these inserts (10a to 410a, 11a to 511 a) is a thermoplastic composite and **in that** a heating and a compression are used to make said assembly, or else **in that** the material used for the leaf (1 to 501) and for these inserts (10a to 410a, 11a to 511a) is a thermosetting composite and **in that** polymerization by curing in a mold is used in order to make said assembly.
